# DEMANDE DE BREVET EUROPEEN

(11) **EP 0 569 290 A1**
(43) Date de publication de la demande: **10.11.1993**
(21) Numéro de dépôt: 93401152.9
(22) Date de dépôt: 05.05.1993
(51) Int. Cl.: G06F 15/16

(54) **Processeur de traitement d'informations de vol**

(30) Priorité: 06.05.1992 FR 9205595
(71) Demandeur: AEROSPATIALE Société Nationale Industrielle, F-75781 Paris Cédex 16 (FR)
(72) Inventeur: Partouche, Patrick, F-92140 Clamart (FR); Vazeilles, Michel, F-92320 Chatillon (FR)
(74) Mandataire: Joly, Jean-Jacques

(57) **Abrégé**

La présente invention concerne un processeur de traitement d'informations de vol destiné à coopérer, par l'intermédiaire d'un bus de liaison, avec un processeur de communication, caractérisé en ce qu'il comporte un coprocesseur (10) permettant le traitement d'informations contenues dans une mémoire de données (13) à partir d'instructions contenues dans une mémoire de code (11,12) indépendante de cette mémoire de données, et un circuit spécifique (14) de type ASIC contenant un ensemble mémoire permettant un transfert de données du coprocesseur (10) vers le processeur de communication au travers du bus de liaison et vice-versa.

Les communications entre le coprocesseur (10) et le processeur de communication sont réalisées sous le contrôle d'un moniteur temps-réel contenu dans la mémoire de code non volatile (11).

## Description

La présente invention concerne un processeur spécifique de traitement d'informations de vol mis en oeuvre dans le cadre d'une architecture bi-processeur et destiné principalement à une utilisation dans le domaine aéronautique ou militaire.

Lorsqu'il s'agit de mettre en oeuvre des architectures bi-processeurs organisés par exemple autour d'un processeur maître et d'un processeur esclave, il est fait souvent appel à une structure utilisant un bus spécifique pour assurer les échanges entre ces processeurs, et une mémoire double accès pour permettre le passage des données transitant d'un processeur à l'autre.

Cependant, une telle structure nécessairement complexe est mal adaptée à un environnement embarqué dans lequel compacité et, dans une certaine mesure, simplicité de fonctionnement sont recherchés. C'est pourquoi, dans cet environnement, le recours à des circuits de type ASIC (Application Specific Integrated Circuit), spécifiques à une application donnée, est fréquente car elle permet l'intégration d'un grand nombre de composants tels que des circuits de logique combinatoire ou séquentielle par exemple.

Toutefois, ces circuits spéciaux ne permettent pas la réalisation de toutes les fonctions électroniques et notamment il n'existe pas à ce jour de tels circuits intégrant une fonction mémoire à double accès.

Un but de l'invention est donc de pouvoir mettre en oeuvre une fonction mémoire à double accès dans le cadre d'un circuit de type ASIC.

Un autre but de l'invention est de réaliser un processeur spécifique intégrant ce circuit ASIC et permettant, dans le cadre d'une architecture bi-processeur, des traitements rapides sans imposer une gestion complexe des échanges entre les processeurs constituant cette architecture.

Ces buts sont atteints par un processeur de traitement d'informations de vol destiné à coopérer, par l'intermédiaire d'un bus de liaison, avec un processeur de communication, comportant un coprocesseur permettant le traitement d'informations contenues dans une mémoire de données à partir d'instructions contenues dans une mémoire de code indépendante de cette mémoire de données, et un circuit spécifique de type ASIC contenant un ensemble mémoire permettant un transfert de données du coprocesseur vers le processeur de communication au travers du bus de liaison et vice-versa.

L'utilisation conjointe d'une mémoire de code et d'une mémoire de données permet d'augmenter notablement la puissance de traitement de coprocesseur qui peut ainsi, par exemple, à la fois lire des instructions et acquérir des données provenant éventuellement du processeur de communication au travers de l'ensemble mémoire qui assure un transfert bidirectionnel de ces données.

La mémoire de code est constituée d'une mémoire non volatile et d'une mémoire volatile, les instructions contenues préalablement dans la mémoire non volatile étant transférées dans la mémoire volatile lors de l'initialisation du processeur de traitement.

Ce transfert après l'initialisation augmente encore la vitesse de traitement des informations en permettant un accès plus rapide aux instructions contenues alors dans la mémoire volatile.

Le circuit spécifique de type ASIC comporte en outre des moyens de commande de la mémoire de code, des moyens de commande de la mémoire de données et des moyens pour délivrer à l'ensemble mémoire des signaux d'adresses et de contrôle à partir de signaux correspondants du coprocesseur.

La réalisation de ce circuit selon la technologie ASIC permet de limiter le nombre de composants et donc de faciliter son utilisation dans les structures embarquées.

De préférence, l'ensemble mémoire comporte une mémoire pour permettre l'échange des données entre le processeur et le processeur de communication par l'intermédiaire du bus de liaison; un premier multiplexeur qui délivre des signaux d'adresses pour la mémoire à partir de signaux d'adresses en provenance soit du coprocesseur au travers du circuit spécifique, soit du processeur de communication au travers du bus de liaison ; un second multiplexeur qui délivre des signaux de contrôle pour la mémoire à partir de signaux de contrôle en provenance soit du coprocesseur au travers du circuit spécifique, soit du processeur de communication au travers du bus de liaison ; et un troisième multiplexeur qui délivre des signaux d'entrée de données pour la mémoire à partir de signaux bidirectionnels de données en provenance soit du coprocesseur, soit du processeur de communication au travers du bus de liaison.

Les signaux bidirectionnels de données en provenance du coprocesseur et du processeur de communication sont reçus chacun sur un tampon bidirectionnel qui délivre un signal de données pour le troisième multiplexeur et reçoit un signal de sortie de données de la mémoire à destination soit du coprocesseur, soit du processeur de communication.

Cette structure particulière permet de réaliser, à partir d'une mémoire statique classique, de type SRAM par exemple, une mémoire à double accès autorisant un transfert bidirectionnel entre le coprocesseur et le processeur de communication.

Avantageusement, les tampons bidirectionnels sont sélectionnés en sortie de telle sorte que le processeur de communication ait un accès prioritaire à la mémoire par rapport au coprocesseur.

De façon préférentielle, la mémoire est divisée en deux zones gérées chacune en tampon circulant et destinées l'une à la réception de messages par le coprocesseur et l'autre à l'émission de messages du coprocesseur.

Cette gestion particulièrement simple à laquelle sont attachées deux interruptions indiquant que le tampon est plein ou qu'un message est en cours de traitement est un avantage supplémentaire de la structure matérielle décrite, dans lequel l'ensemble des communications entre le coprocesseur et le processeur de communication sont de préférence réalisées sous le contrôle d'un moniteur temps-réel contenu dans la mémoire de code non volatile.

D'autres caractéristiques et avantages de la présente invention ressortiront mieux à la lecture de la description faite ci-après, à titre indicatif mais non limitatif, en référence au dessins annexés sur lesquels:
- la figure 1 est un schéma synoptique d'un processeur selon l'invention,
- la figure 2 est un schéma simplifié d'un circuit ASIC spécifique au processeur selon l'invention,
- la figure 3 montre une mémoire fonctionnant selon un mode double-accès et intégré au circuit ASIC de la figure 2,

L'architecture bi-processeur dont un processeur est l'objet de la présente invention est organisée autour de deux processeurs, d'une mémoire d'échange et d'un organe de communication. L'un de ces deux processeurs, qui est relié à l'extérieur par l'organe de communication, est dénommé processeur de communication, le second processeur, que l'on appelera coprocesseur, ne pouvant communiquer avec l'extérieur que par l'intermédiaire de ce processeur de communication. Le transfert d'informations entre chacun des deux processeurs est assuré par la mémoire d'échange en fonction de différentes interruptions ou exceptions traitées par ces processeurs.

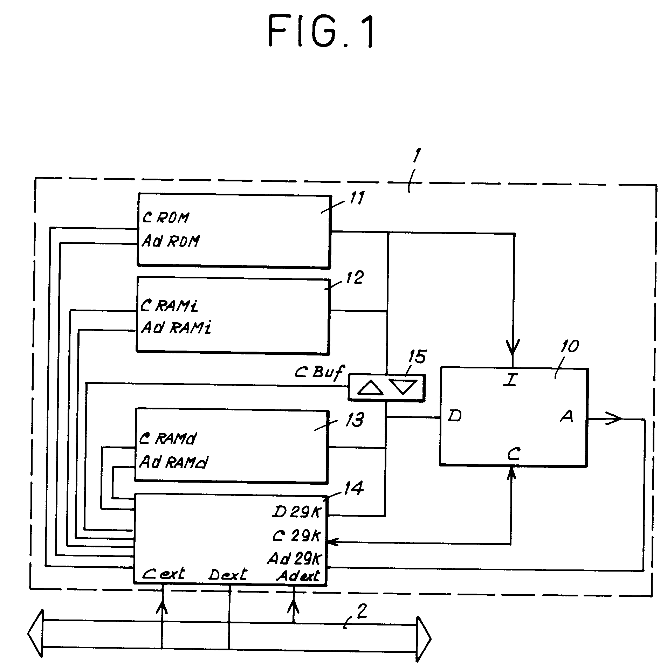

La figure 1 montre un schéma synoptique d'une carte coprocesseur destinée à être mise en oeuvre dans le cadre d'une architecture bi-processeur.

Cette carte coprocesseur 1, reliée au processeur de communication, non représenté, par un bus synchrone 2, comporte le coprocesseur proprement dit 10, une mémoire de code ou d'instructions 11, 12, une mémoire de données 13, et un circuit spécifique 14 de contrôle et d'interface avec le bus synchrone 2.

Typiquement, le coprocesseur 10 se présente sous la forme d'un microprocesseur à jeu d'instructions réduit dit RISC (Reduced Instruction Set Computer) par exemple un composant de la famille Am 29k d'AMD (Advanced Micro Device) comme le processeur Am29050. Le recours au processeur Am29000 associé à un circuit numérique Am29027 est pareillement envisageable. Cette famille se caractérise par une architecture employant un grand nombre de registres, une pile de registres, des registres globaux et des registres d'états du processeur, et par une possibilité de réceptionner les interruptions et les exceptions. Toutefois, la mémorisation des exceptions externes n'étant pas possible avec cette famille de processeurs, celle-ci est prévue au niveau de la carte 1.

La mémoire d'instructions se décompose en une mémoire d'instructions non volatile 11 et une mémoire d'instructions volatile 12 ayant chacune accès au bus d'instructions I du coprocesseur 10 et permettant en outre, grâce à un registre bidirectionnel 15, un passage vers le bus de données D de ce processeur. L'utilisation de deux types distincts de mémoire permet de faciliter la mise au point de la carte coprocesseur 1 qui nécessite de fréquentes modifications de la mémoire d'instructions. Cette phase de mise au point terminée, les instructions définitives sont alors emmagasinées dans la mémoire non volatile 11. Lors de l'initialisation générale du calculateur, constitué par l'architecture bi-processeur, le contenu de cette mémoire non volatile 11 est transféré vers la mémoire volatile 12 correspondante, ce transfert autorisant ensuite des traitements d'information beaucoup plus rapide. La mémoire volatile 12 est du type mémoire à accès aléatoire (RAM) et la mémoire non volatile 11 avantageusement du type mémoire morte programmable et effaçable électriquement (EEPROM) afin de permettre une programmation in situ sans modification ou changement de l'architecture. Il doit être noté qu'il n'est pas nécessaire de proposer un accès par le bus instructions au contenu de la mémoire non volatile et que le passage vers le bus de données, cité précédemment, est uniquement réalisé dans le but de faciliter la mise au point ou la maintenance de la carte coprocesseur 1.

La mémoire de données 13 n'est en principe pas présente dans ce type d'architecture utilisant un composant de type RISC, la mémoire d'instructions étant la seule mémoire de travail. Toutefois, l'utilisation d'une mémoire unique, en tant que mémoire d'instructions et de données, implique l'interruption du déroulement des instructions à chaque accès de cette mémoire par le bus de données.

C'est pourquoi il a été choisi d'implanter sur la carte coprocesseur 1 une mémoire de données spécifique 13 ayant accès au bus de données D du coprocesseur 10. Ainsi, il est possible d'effectuer en parallèle une lecture d'instruction et une acquisition de donnée par exemple, ce qui augmente notablement la puissance de traitement de ce coprocesseur.

Cette accélération du traitement est encore renforcée par le fait que la mémoire de données comme la mémoire d'instructions supporte un mode de transfert d'informations connu de l'homme de l'art sous le nom de mode burst.

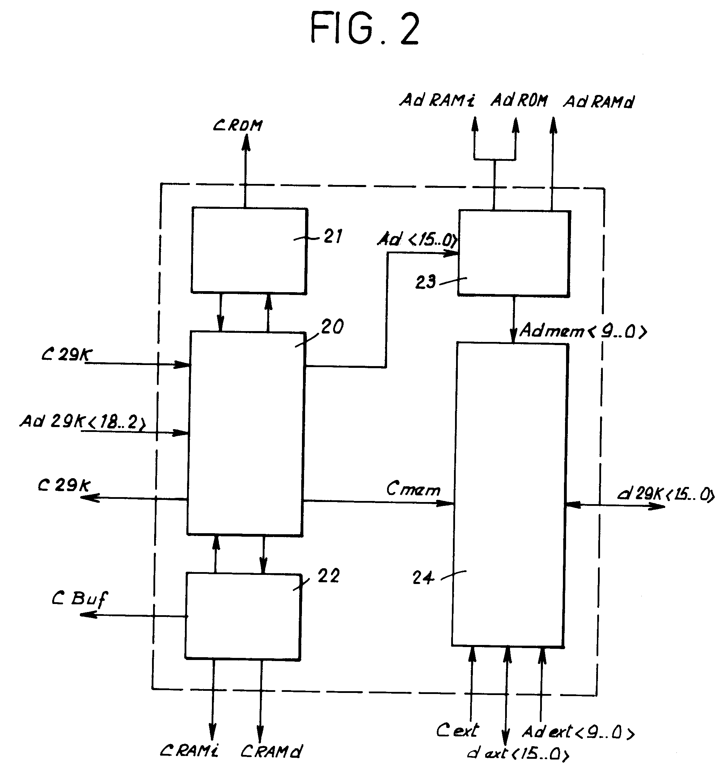

Enfin, le circuit spécifique 14 assure l'interface entre le coprocesseur 10 et d'une part l'ensemble des mémoires 11 à 13 de la carte coprocesseur 1 et d'autre part le bus synchrone 2. Sa structure interne ainsi que son fonctionnement seront décrit plus avant au regard de la figure 2.

Le contrôle des communications entre les deux processeurs est assuré par un moniteur temps réel qui gère également des tâches immédiates lancées sous interruptions et des tâches différées. Ces différentes fonctions sont réalisées à l'aide de primitives que l'on peut regrouper en différentes classes : gestion des données, gestion des files d'attente, gestion des passages de message, gestion de mémoire, gestion des tâches. L'indépendance de chaque classe est permise par l'emploi d'une programmation dite orientée objet qui permet notamment d'utiliser la notion d'héritage bien connue dans ce type de programmation. Il est ainsi possible d'obtenir un code objet très modulaire qui facilite les tests, augmente la fiabilité et permet de ne placer en mémoire que les primitives nécessaires. Certaines de ces primitives sont accessibles directement par les tâches utilisateur, d'autres ne peuvent être manipulées que par l'intermédiaire des précédentes.

Dans le cas d'un dispositif embarqué, tel que celui de l'invention, le moniteur étant nécessairement emmagasiné dans une mémoire morte non accessible en écriture par l'utilisateur, il faut que le code soit indépendant du nombre de tâches, du nombre de sémaphores ou bien encore de la taille et de l'emplacement de la mémoire des données utilisées par l'application considérée. C'est pourquoi l'accès aux différentes tables nécessaires par exemple à la gestion des files d'attente n'est pas effectuée directement, mais par l'intermédiaire de pointeurs, ce qui autorise une gestion dynamique de ces tables à l'image de celle de la mémoire.

Classiquement, les tâches peuvent être dans les trois états suivants : suspendu, courant et prêt. Dans le dernier cas, la tâche est dans une file d'attente gérée suivant une priorité dont le nombre de niveaux peut être par exemple limité à 16. Les états des tâches peuvent être modifiés à l'aide de primitives spécifiques. Ainsi, une primitive "resume" permet de placer une tâche suspendue dans l'état prêt et dans l'état courant si sa priorité est plus grande que celle de la tâche en cours; une primitive "suspend" permet de placer dans l'état suspendu une tâche disponible dans la file des éligibles ; et une primitive "resume-suspend" place la tâche courante dans l'état suspendu, assurant ainsi un changement de contexte (de tâche) minimal. Cette dernière primitive qui implique la surpression des accès aux files d'attente nécessite un séquencement volontaire, par le programmeur, de chaque tâche à l'aide de son identifiant. Ceci permet de mieux dominer l'exécution des tâches en les séquençant par les liens bi-directionnels, et donc d'obtenir un comportement très prévisionnel. Il s'agit ici d'un avantage important par rapport aux moniteurs de l'art antérieur.

Dans le cadre de la présente invention, le traitement des interruptions et exceptions évoqué précédemment a donné lieu à la création de primitives liée à l'architecture spécifique de la famille Am 29k. Il s'agit principalement des suivantes: primitives de masquage des exceptions, primitives d'acquittement des interruptions externes, primitives permettant d'attacher des tâches immédiates à ces exceptions et interruptions et primitives donnant un message d'erreur dans un mot d'état si une exception arrive alors qu'aucune tâche immédiate n'est attachée à ce niveau d'exception.

Les tâches immédiates s'exécutent dans le corps de la tâche courante. Elles héritent donc des caractéristiques de la tâche courante, notamment de sa priorité. D'autre part, ces tâches immédiates, en particulier les tâches rattachées aux interruptions externes ou à l'interruption horloge, peuvent utiliser toutes les primitives du moniteur. L'exécution de certaines sections du code peuvent alors devenir critique c'est ainsi le cas de la procédure de communication par mémoire commune. Cela a nécessité la création d'un couple de primitives "schedul" et "noschedul" qui bloque d'ordonnanceur, c'est-à-dire qu'après l'appel à la primitive "noschedul" une tâche non courante ne peut au mieux que devenir éligible, et une tâche courante rester courante. Ce n'est qu'après un "schedul" que l'on regarde si une tâche éligible doit devenir courante.

Il est possible dans une section critique de définir d'autres sections critiques; dans ce cas, l'ordonnanceur ne sera relancé qu'à la sortie de la dernière section critique.

Les primitives qui doivent forcément modifier le statut de la tâche courante ne peuvent s'exécuter dans une section critique, et retournent un message d'erreur rendant ce comportement prévisible. En conséquence, les tâches en section critique peuvent utiliser les primitives de gestion de tâches en attente d'événements telle que "passage de message" et "sémaphore", et elles ne peuvent utiliser les autres procédures que si la tâche immédiate (en fait la tâche courante) est d'une priorité supérieure à la tâche que l'on veut séquencer. Il faut alors, avant de sortir de la tâche courante, retrouver l'ancienne priorité. Les tâches immédiates sont automatiquement placées dans une section critique; ce n'est qu'à la sortie de la tâche immédiate que la primitive "schedul" est automatiquement lancée.

Les primitives du moniteur accédant à des tableaux de structures communes ne sont donc pas réentrantes : une primitive en cours d'exécution pour une première tâche ne peut être interrompue par une primitive lancée par une seconde tâche. Il faut donc masquer, par exemple matériellement, les exceptions pour différer leur prise en compte jusqu'à la sortie de la primitive. Cette organisation est définie par rapport à une stratégie des communications qui, notamment, limite l'utilisation des interruptions externes et ne nécessite pas une réponse immédiate à ces interruptions. En outre, il est rappelé que les interruptions externes reçues par le coprocesseur sont mémorisées sur la carte coprocesseur tant qu'elles n'ont pas été acquittées en fin de tâche.

L'interruption horloge est masquée par logiciel, afin de ne pas risquer de perdre des signaux de synchronisation d'horloge devant des durées variables des primitives et afin de minimiser les dépassements du sablier de datation.

La datation n'est pas interrompue, la gestion de l'horloge étant seule masquée.

Pour permettre l'utilisation de tâches cycliques, il a été créé deux primitives, la première, "cyclic-start" déclare une tâche comme étant cyclique, la deuxième "cyclisleep" permet de relancer la tâche cycliquement, cette dernière calculant en outre le temps nécessaire pour terminer le cycle.

L'utilisation de pointeurs permet aux primitives de modifier un nombre quelconque de structures, en particulier de manipuler plusieurs files d'attente. Cette technique permet d'associer des sémaphores avec des délais: les sémaphores gardés. Les sémaphores gardés héritent de la classe des délais et de celle des sémaphores. Afin de relier ces deux classes, la structure des files a été modifiée, un nouveau champ permettant de relier les deux classes. Les files d'attente sont gérées au choix en FIFO (premier entré- premier sorti) ou en LIFO (dernier entré-premier sorti).

La figure 2 montre un schéma synoptique du circuit d'interface à double accès 14. Celui-ci comporte une logique de commande et de contrôle 20, deux ensembles de commande des mémoires externes 21 et 22, des compteurs d'adresses 23 et un bloc mémoire 24 comportant la mémoire d'échange des données entre le processeur et un organe extérieur. Un circuit de génération d'horloge non représenté assure le synchronisme général de l'ensemble et délivre notamment un signal d'horloge Ckmen pour la mémoire.

La logique de commande et de contrôle 20 est reliée au bus d'adresse Ad 29k ainsi qu'aux signaux de contrôle C29k du coprocesseur et génère des signaux de commande notamment à destination des deux ensembles de commande mémoire 21,22. Chacun de ces ensembles délivrent des signaux de contrôle CROM respectivement CRAMi et CRAMd pour la mémoire non volatile 11 et les mémoires RAM d'instructions 12 et de données 13. Ces signaux comprennent au moins un signal de sélection, un signal de lecture et un signal d'écriture, l'adresse à laquelle l'information de la mémoire sélectionnée devra être lue ou écrite étant fournie par les compteurs d'adresses 23.

Un signal CBuf, généré par exemple par l'ensemble de commande mémoire 22, assure le contrôle du circuit tampon 15 et permet ainsi un passage bidirectionnel vers le bus de données pour les mémoires d'instructions 11 et 12.

Le bloc mémoire 24 est relié au bus de liaison 2, relié lui-même à l'organe extérieur, par des signaux d'adresses Adext, de données dext et de contrôle Cext et reçoit du coprocesseur 10 soit directement, soit indirectement par l'intermédiaire de la logique de commande et de contrôle 20, des signaux de données d29k, d'adresses Admem et de contrôle Cmem.

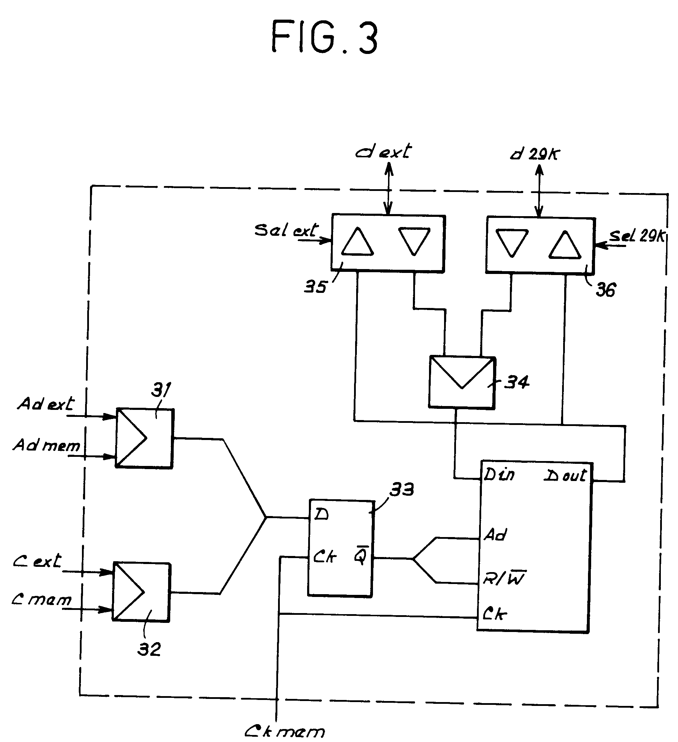

Le bloc mémoire comporte la mémoire d'échange ainsi qu'une logique de séquencement d'accès pour permettre à cette mémoire d'échange à accès simple un fonctionnement double accès. La figure 3 détaille plus précisément la structure du bloc mémoire 24.

La mémoire d'échange est une mémoire classique du type à accès aléatoire statique 30 comportant des entrées Din et des sorties Dout de données, des entrées d'adresses Ad, un signal de sélection R/W et un signal d'horloge Ck. Afin de permettre un accès à la mémoire tant du coprocesseur 10 que de l'organe extérieur relié au bus de liaison 2, les différents signaux de données, d'adresses et de sélection sont multiplexés. Un premier multiplexeur 31 permet de relier l'entrée adresses Ad de la mémoire soit aux signaux d'adresses Adext en provenance du bus de liaison 2, soit aux signaux d'adresses Admem élaborés à partir des signaux d'adresses Ad29k du coprocesseur 10. Un second multiplexeur 32 permet de relier l'entrée R/W de la mémoire aux signaux de contrôle, plus précisément aux signaux d'écriture, en provenance soit du coprocesseur Cmem soit du bus de liaison Cext. Des moyens de mémorisation 33, des bascules de type D par exemple, actionnés au rythme du signal d'horloge Ckmem, permettent une synchronisation des signaux reçus des multiplexeurs 31 et 32 et délivrés à la mémoire 30. Un troisième multiplexeur 34 assure le multiplexage des données en provenance soit du coprocesseur d29K soit du bus de liaison dext, au travers de tampons bidirectionnels 35,36. Le premier tampon bidirectionnel 35 est relié d'une part aux signaux de données dext du bus de liaison et d'autre part aux entrées Din, par l'intermédiaire du multiplexeur 34, et aux sorties Dout de données de la mémoire 30. Le second tampon bidirectionnel 36 est relié d'une part aux signaux de données d29K du coprocesseur 10 et d'autre part aux entrées Din, par l'intermédiaire du multiplexeur 34, et aux sorties Dout de données de la mémoire 30. La sélection de ces deux tampons 35,36 en entrée pour l'écriture de données dans la mémoire et en sortie pour la lecture de ces données est réalisée par des signaux de sélection Selext et Sel29K élaborés à partir des signaux de contrôle Cext, C29K de telle sorte que l'organe extérieur relié au bus de liaison 2 puisse accéder en priorité, par rapport au coprocesseur 10, à cette mémoire 30.

Cette priorité à l'organe extérieur ne gêne en rien les communications entre celui-ci et le coprocesseur. En effet, de préférence ces communications ne sont pas très nombreuses, la taille des messages est petite mais variable et le nombre de messages qui doit déclencher impérativement une tâche différée est encore plus faible.

En outre, la gestion de ces communications est facilitée par le partage de la mémoire en deux zones, une d'émission de message du co-processeur et une de réception de message par le co-processeur. Chaque zone est gérée en tampon circulant. Les tampons sont initialisés par le coprocesseur. Chaque message possède un en-tête qui le caractérise, et donne par exemple le nombre de mots du message. Deux interruptions sont rattachées à cette gestion : la première pour indiquer la présence d'un message, la deuxième pour indiquer que le tampon est plein.

L'interruption de présence de message est envoyée au choix de l'utilisateur. Celui-ci peut placer plusieurs messages, uniquement à la fin du dernier lever d'interruption. Ainsi, le nombre d'interruptions et de traitements de ces interruptions peut être minimisé. A la réception d'une interruption de message-présent, le traitement ou même la réception du message peut être différé. A la fin de l'exécution de la primitive de réception du message, il est indiqué si un autre message est présent dans le tampon circulant.

La structure matérielle du bloc mémoire 24 ainsi définie se prête bien à une réalisation sous forme d'ASIC et permet ainsi d'obtenir une carte coprocesseur 1 de dimension réduite et donc particulièrement adaptée à une utilisation en tant que matériel embarqué.

Ainsi, dans le cadre d'une architecture bi-processeur telle que définie en tête de la description, la carte coprocesseur aura pour rôle d'alléger les traitements du processeur de communication (l'organe extérieur) en effectuant la plupart des calculs relatifs aux informations de vol. Pour cela, un programme de vol sera préalablement emmagasiné dans la mémoire non volatile 11, puis transféré dans la mémoire vive 12 lors de l'initialisation de la carte coprocesseur au départ du vol, le dispositif devenant dès lors autonome.

## Revendications

1. Processeur de traitement d'informations de vol destiné à coopérer, par l'intermédiaire d'un bus de liaison, avec un processeur de communication, caractérisé en ce qu'il comporte un coprocesseur (10) permettant le traitement d'informations contenues dans une mémoire de données (13) à partir d'instructions contenues dans une mémoire de code (11,12) indépendante de cette mémoire de données, et un circuit spécifique (14) de type ASIC contenant un ensemble mémoire (24) permettant un transfert de données du coprocesseur (10) vers le processeur de communication au travers du bus de liaison (2) et vice-versa.

2. Processeur selon la revendication 1, caractérisé en ce que la mémoire de code est constituée d'une mémoire non volatile (11) et d'une mémoire volatile (12), les instructions contenues préalablement dans la mémoire non volatile (11) étant transférées dans la mémoire volatile (12) lors de l'initialisation du processeur de traitement.

3. Processeur selon la revendication 1 ou la revendication 2, caractérisé en ce que le circuit spécifique (14) comporte en outre des moyens (21) de commande de la mémoire de code (11,12), des moyens (22) de commande de la mémoire de données (13) et des moyens (20,23) pour délivrer à l'ensemble mémoire (24) des signaux d'adresses et de contrôle à partir de signaux correspondants du coprocesseur (10).

4. Processeur selon l'une quelconque des revendications 1 à 3, caractérisé en ce que l'ensemble mémoire (24) comporte une mémoire (30) pour permettre l'échange des données entre le processeur (10) et le processeur de communication par l'intermédiaire du bus de liaison (2); un premier multiplexeur (31) qui délivre des signaux d'adresses pour la mémoire (30) à partir de signaux d'adresses en provenance soit du coprocesseur (10) au travers du circuit spécifique (14), soit du processeur de communication au travers du bus de liaison (2) ; un second multiplexeur (32) qui délivre des signaux de contrôle pour la mémoire (30) à partir de signaux de contrôle en provenance soit du coprocesseur (10) au travers du circuit spécifique (14), soit du processeur de communication au travers du bus de liaison (2); et un troisième multiplexeur (34) qui délivre des signaux d'entrée de données pour la mémoire (30) à partir de signaux bidirectionnels de données en provenance soit du coprocesseur (10), soit du processeur de communication au travers du bus de liaison (2).

5. Processeur selon la revendication 4, caractérisé en ce que les signaux bidirectionnels de données en provenance du coprocesseur (10) et du processeur de communication sont reçus chacun sur un tampon bidirectionnel (35,36) qui délivre un signal de données pour le troisième multiplexeur (34) et reçoit un signal de sortie de données de la mémoire (30) à destination soit du coprocesseur (10), soit du processeur de communication.

6. Processeur selon la revendication 4 ou la revendication 5, caractérisé en ce que les tampons bidirectionnels (35,36) sont sélectionnés en sortie de telle sorte que le processeur de communication ait un accès prioritaire à la mémoire (30) par rapport au coprocesseur (10).

7. Processeur selon l'une quelconque des revendications 1 à 6, caractérisé en ce que la mémoire (30) est divisée en deux zones gérées chacune en tampon circulant et destinées l'une à la réception de messages par le coprocesseur (10) et l'autre à l'émission de messages depuis le coprocesseur (10).

8. Processeur selon l'une quelconque des revendications 1 à 7, caractérisé en ce qu'il permet une mémorisation des exceptions externes reçues par le coprocesseur (10).

9. Processeur selon l'une quelconque des revendications 1 à 8, caractérisé en ce que les communications entre le coprocesseur (10) et le processeur de communication sont réalisées sous le contrôle d'un moniteur temps-réel contenu dans la mémoire de code non volatile (11).
